# EUROPEAN PATENT SPECIFICATION

(11) **EP 0 504 171 B1**
(45) Date of publication and mention of the grant of the patent: **05.04.1995**
(21) Application number: 90917438.5
(22) Date of filing: 06.12.1990
(51) Int. Cl.: B26F 1/24

(54) **SHEET PERFORATION**
PERFORATION VON FOLIEN
PERFORATION DE FEUILLES

(30) Priority: 07.12.1989 GB 8927654; 22.01.1990 GB 9001415
(43) Date of publication of application: 23.09.1992
(73) Proprietor: FRA.MO. Snc di Franca Riva & C., I-27085 Voghera (IT)
(72) Inventor: MacKINNON, Robin, London NW2 3RS (GB)
(74) Representative: Wharton, Peter Robert
(86) International application number: GB9001900
(87) International publication number: WO9108873

(56) References cited:
- EP-A- 0 339 593
- DE-A- 1 952 341
- DE-A- 2 027 373
- GB-A- 1 037 711
- US-A- 2 244 550
- US-A- 3 707 102

## Description

This invention relates to a method and apparatus according to the preambles of claims 8 and 1 for perforating thermoplastic sheets, for example corrugated polyolefin sheets.

Containers for the preservation and transport of food stuffs may be made from thermoplastic sheet material so as to be solid, light and economical. However, when used for the transport and storage of wares having high moisture content, for example fruit or vegetables, deterioration of the product may occur owing to build up of moisture within the container.

It has been proposed to provide such containers with a plurality of holes, for example by forming them from perforated sheets, and this reduces the problem considerably.

DE-A-2027373 discloses an apparatus for perforating thermoplastic film which comprises a cooling plate, plate means for carrying an array of heated pins, and a support plate whereby the pins pass through the support plate and perforate the film.

The invention seeks to provide an improved method and apparatus for the production of perforated thermoplastic sheets.

According to the present invention there is provided an apparatus for perforating thermoplastic sheet material which comprises a platen for supporting the sheet material, means (16) for carrying an array of heated pins (14) so that the array can be brought into contact with the sheet material held on the platen whereby to perforate the same and a layer of material (18) between the means for carrying the array of heated pins and the thermoplastic sheet material whereby to protect the sheet during perforation characterised in that the pins (14) are held in a strip or strips of material (16), the layer (18) is of an insulating material, and that the pins in use are heated to at least double the melting point of the thermoplastic material.

The array of pins may be carried on a strip or strips of material capable of being heated, for example electrically. Alternatively, each needle may be individually heated. In order to prevent wholesale melting of the thermoplastic sheet when the array of pins is brought into contact therewith , a support in the form of a layer of insulating material may be provided having a series of holes therein through which the pins project, but this may not be necessary, especially where the heating is confined to the pins. In the latter respect an internal heating unit or cartridge has been found most advantageous, for accurate temperature control.

The apparatus of the invention preferably makes use of an existing cutting and creasing apparatus. In this case the platen may be the cutting and creasing apparatus platen on which the thermoplastic sheet material is laid. The means for carrying the array of pins may be the cover carrying the cutting or creasing knives, or the means may be attached to the corner, and the array of pins will be disposed within the area bound by the cutting blades. Thus the apparatus may perform a two fold action: it may simultaneously cut the thermoplastic sheet to the desired size and shape and simultaneously perforate it. Alternatively, the apparatus can be placed in the stripping section of cutting and creasing machines provided with the same.

The invention further comprises a method of perforating a thermoplastic sheet which comprises providing a platen for supporting the sheet material and means for carrying an array of heated pins, bringing the array into contact with the sheet material held on the platen whereby to perforate the same and providing a layer of material between the means for carrying the array of heated pins and the thermoplastic sheet material whereby to protect the sheet during perforation characterised in that the pins are held in a strip or strips of material, the layer is of an insulating material, and that the pins are heated to at least double the melting point of the thermoplastic material whereby to effect perforation thereof. The invention further includes a sheet so perforated.

The thermoplastic sheet may be formed from any suitable thermoplastic material, such as a polyolefin e.g. polyethylene or polypropylene. However, the sheet is preferably a multi-layer corrugated thermoplastic sheet and it is especially preferred that the sheet have three or more walls or layers. The thermoplastic material employed in the sheet may comprise partly or all recycled material and in one aspect of the invention it is preferred that such recycled material is employed. The inclusion of the recycled material may be selectively positioned in the sheet structure,e.g. within the body of sheet rather than in the faces thereof.

It has been found that temperature control is critical to the satisfactory operation of the invention. Too cool, and rough or irregular holes may be formed and the sheet will tend to stick to the array; too hot and excessive melting or burning will take place. Surprisingly, we have found that pin tip temperatures in excess of double the melting point of the polymer sheet give best results. For preformed polyolefin sheet materials with a melting point in the region of 155°C we have found pin tip temperatures in the region of from 360 to 410°C to be satisfactory, with around 390°C being optimum. Satisfactory holes are produced from 360°C but production speed increases until at temperatures in excess 410°C the sheet starts burning around the hole edges.

Each pin and the underside of the array may be surface treated, for example with a release coating, and the pins are preferably specially shaped so that it does not stick to and pull the plastics material when operated at the required speed of cycle and at the necessary temperature. The avoidance of sticking is essential in order to produce holes of good quality.

The shape of the individual pins may be chosen within wide limits. However, we have found that to obtain compromise a cylindrical main section having a tapered or concical end portion terminating in a tip which provides a lead into the conical portion.

The invention will be described further, by way of example, with reference to the accompanying drawings, in which :
Figure 1 is a cross-sectional view of part of an apparatus in accordance with the present invention;
Figure 2(a) and (b) are partial plan views of arrays of pins;
Figure 3 is a perspective detail view of part of Figure 2;
Figure 4 is a plan view of the insulating and support layer;
Figure 5 is a diagrammatic sectional view of a form of pin;
Figure 6 is a diagrammatic sectional view of an array of pins as shown in figure 5; and
Figure 7 is a diagrammatic plan view corresponding to figure 6.

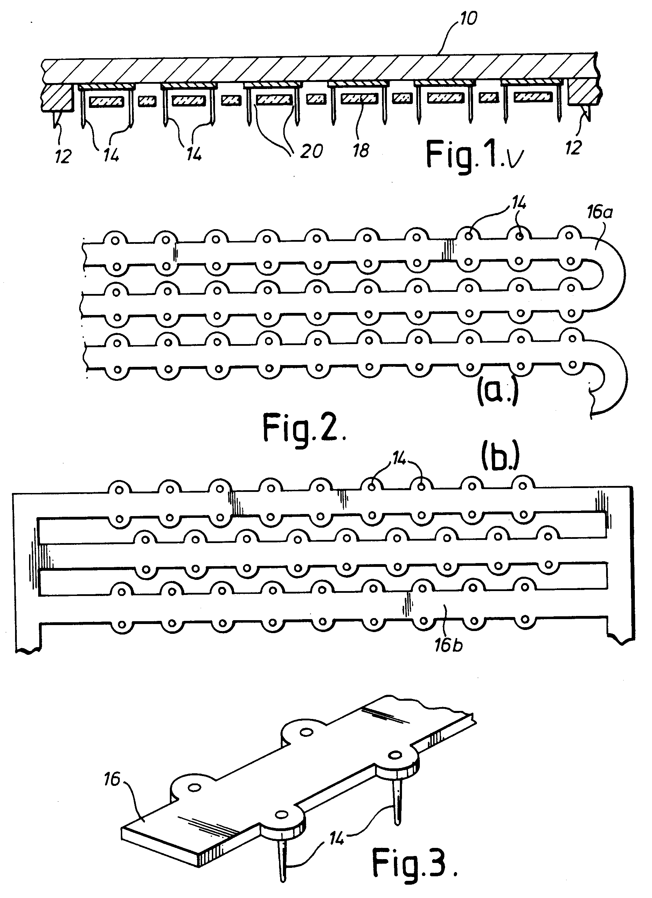

Referring to the drawings, a thermoplastic sheet for perforation is laid on the platen of an apparatus, preferrably a modified cutting and creasing apparatus . The apparatus is provided with a cover 10 conventionally having cutting blades 12 for cutting a sheet of the required size and shape. In accordance with the invention the cover 10 is further provided with an array of pins 14 affixed thereto betweeen the boundries delineated by the blades 12. As can be seen more clearly from figure 2, the pins are held in a strip or strips of material 16 which is in turn fixed to the cover 10 and which may be heated, for example electrically. The strip 16(a) (Figure 2(a)) is serpentine in configuration whereas a number of strips 16(b) (Figure 2(b)) may be affixed in parallel. Other arrangements may be employed as desired. If a strip fails it may be replaced without replacing the whole array.

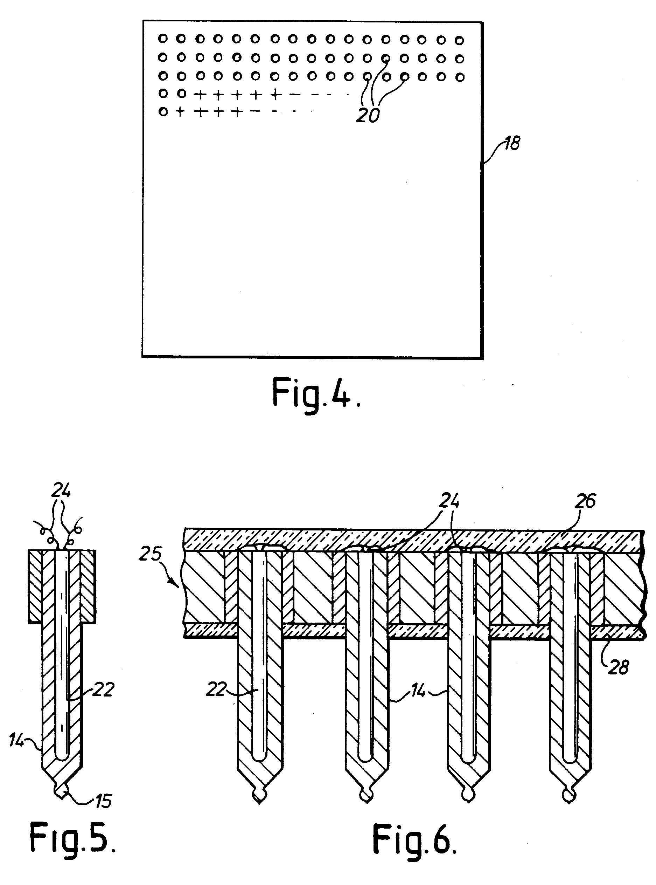

In order to prevent the heated strips 16 from coming into contact with the thermoplastic sheet, a support and insulating layer 18 is provided. If desired the cutting blades could also be attached to this sheet. As can be seen more clearly from Figure 4 the latter comprises a series of aligned holes 20 each of which may receive a needle 14. It is preferred that the layer 18 be provided with sufficient holes 20 for receiving the maximum desired number of pins 14 but that arrays of pins of lesser number may be employed leaving some of the holes 20 redundant. This facilitates a change of design in that the array can be modified by changing the strip 16 without needing to change the support layer 18 also. This is particularly useful when the sheet is to be used for food containers as the requirements for ventilation differ greatly between different kinds of, e.g. fruit and vegetables.

Whilst the cover 10 is illustrated as flat, it will be appreciated that certain cutting and creasing machinery incorporates other configurations, for example a cylindrical roller carrying knives which is rolled across the sheet held on the plated. The array of pins 14 can equally be affixed to such an apparatus.

While the above embodiment has been described referring to "pins" 14, this does not mean that the perforating means need necessarily be conical or cylindrical. Thus the pins 14 could be replaced by knives or implements of other cross-sectional shapes. The word "pins" should be construed accordingly.

Referring now to figures 5 to 7, a preferred form of pin 14 is illustrated. As can be seen from figure 5, the bulk of the pin is cylindrical in shape but the end portion is conical terminating with an "onion-shaped" tip 15. Other shapes may be employed, e.g. conical end portion terminating with a spike, but the former shape has been found to meet the necessary requirements of clean perforation followed by clean separation of the pin from the plastics material sheet when the array is moved vertically. Each pin is provided with a central heating unit or cartridge 22 having wiring 24 enabling it to be connected into an electrical circuit. Each pin is therefore directly heated and preferably each pin is wired in series with a number of other pins heating units to give a circuit which may be conrolled individually so as to give maximum flexibility in the heating of individual arrays of pins. This also increases ease of replacement of arrays and facilitates selection of a particular configuration of pins to suit a given end-use.

As can be seen more clearly from figure 6, each pin may be set into a plate 25 which may optionally be covered above and below with sheets of insulating material 26,28 respectively. Moreover each pin 14 may be fixed into the plate 25 by various methods. One method of fixing the pins into the plate would be to provide the pins with a screw thread and a corresponding thread in the plate. Alternatively, the pins may be glued or welded in place.

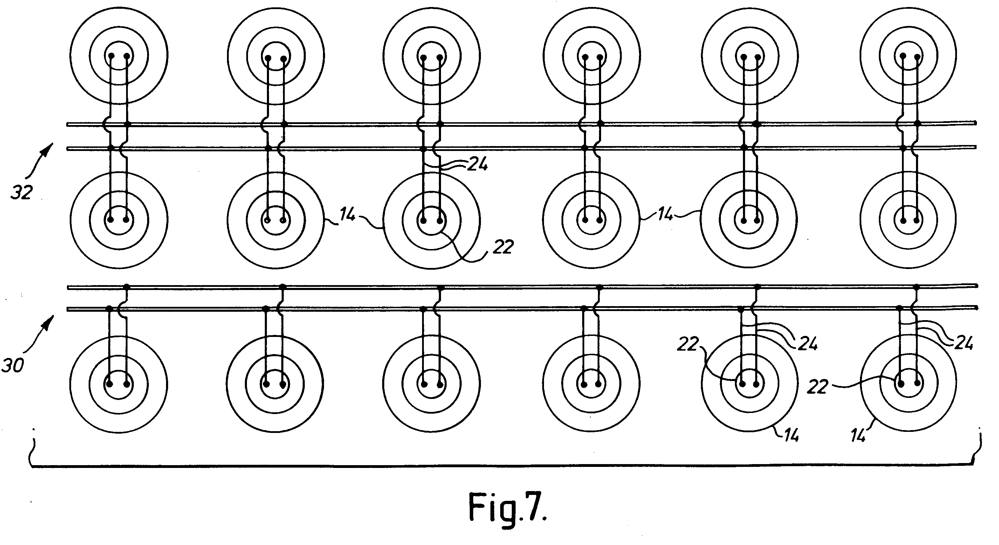

As can be seen from figure 7, the wires 24 from a number of heating units 22 within an array of pins 14 may be connected in parallel to a circuit 30. Each circuit may be provided with its own temperature controller (not shown) e.g. a pyrometer or thermocouple. The upper portion of figure 7 illustrates two such rows of pins being connected to a circuit 32.

By directly heating each pin the most constant and consistent temperature at the pin tip is obtained. The device illustrated may be used with individual cut sheets and may preferably operate in a cycle whereby a sheet is placed below the array of pins, the array brought downwardly to the sheet in an accurate vertical movement in order to ensure precise and regular hole size, and the array thereafter being retracted so as to cleanly remove the pins from the sheet. The perforated sheet is then moved and replaced with an unperforated sheet and the cycle repeated. The platen remains stationary during this process, and the very accurate holes as regards size, shape and distribution can therefore be obtained.

As mentioned above the size and number of pins in a given area may be varied. This is restricted only by reference to the need to secure the pins in the plate 25 and the pin size. Subject to these limits the device can be equipped with any density of pins 14 and, if desired, with pins of different sizes. This together with the precise temperature control and the precise control of the arrays' entry to the sheet to be perforated, allows sheets to be perforated in a controlled manner according to the exact requirements of humidity and passage of air in the finished box made from the perforated sheets.

The plate 25 carrying the pins can be made either of metal or plastics material and the pins will normally be of metal in order to produce the necessary mechanical and thermal properties.

The invention therefore provides simple and economical apparatus and method for introducing perforations of the size and disposition into sheet material, for example for use in packaging. It would be appreciated, of course, that the uses of the sheet material are not so-limited and the invention may be employed to produce thermoplastic sheet material for any end use desired.

## Claims

1. An apparatus for perforating thermoplastic sheet material which comprises a platen for supporting the sheet material, means (16) for carrying an array of heated pins (14) so that the array can be brought into contact with the sheet material held on the platen whereby to perforate the same and a layer of material (18) between the means for carrying the array of heated pins and the thermoplastic sheet material whereby to protect the sheet during perforation characterised in that the pins (14) are held in a strip or strips of material (16), the layer (18) is of an insulating material, and that the pins in use are heated to at least double the melting point of the thermoplastic material.

2. An apparatus as claimed in claim 1 wherein the pins are heated electrically.

3. An apparatus as claimed in claim 2 wherein each pin (14) is heated individually.

4. An apparatus as claimed in any of claims 1 to 3 in which the pins (14) are cylindrical over the bulk of their length and have a conical end portion terminating in a tip (15) which provides a lead into the conical portion.

5. An apparatus as claimed in any of claims 1 to 4 in which certain of the pins (14) within the array are connected together in individual circuits (24), each circuit being capable of individual control.

6. An apparatus as claimed in any of claims 1 to 5 in which the temperature of the pins (14) in use is maintained between 360 and 410°C.

7. An apparatus as claimed in any of claims 1 to 6 located within a cutting and creasing machine.

8. A method of perforating a thermoplastic sheet which comprises providing a platen for supporting the sheet material and means (16) for carrying an array of heated pins (14), bringing the array into contact with the sheet material held on the platen whereby to perforate the same and providing a layer of material (18) between the means for carrying the array of heated pins and the thermoplastic sheet material whereby to protect the sheet during perforation characterised in that the pins (14) are held in a strip or strips of material (16), the layer (18) is of an insulating material, and that the pins are heated to at least double the melting point of the thermoplastic material whereby to effect perforation thereof.

9. A method as claimed in claim 8 wherein the perforation is carried out simultaneously with cutting and creasing.

10. A method as claimed in claim 8 wherein the perforation is carried out simultaneously with a stripping device whereby to strip the sheet while perforating it.

## Patentansprüche

1. Vorrichtung zum Perforieren von Thermoplast-Plattenmaterial, umfassend eine Walze zum Stützen des Plattenmaterials, Mittel (16) zum Tragen einer Anordnung von erhitzen Stiften (14), so daß die Anordnung mit dem, auf der Walze festgehaltenen Plattenmaterial in Kontakt gebracht werden kann, um es auf diese Weise zu perforieren, und eine Schicht von Material (18) zwischen dem Mittel zum Tragen der Anordnung von erhitzten Stiften und dem Thermoplast-Plattenmaterial, um die Platte während des Perforierens zu schützen, dadurch gekennzeichnet, daß die Stifte (14) in einem oder mehreren Materialstreifen (16) gehalten werden, daß die Schicht (18) aus einem Isoliermaterial besteht und daß die Stifte bei Gebrauch auf wenigstens das Doppelte der Schmelzpunkttemperatur des Thermoplastmaterials erhitzt werden.

2. Vorrichtung nach Anspruch 1, wobei die Stifte elektrisch erhitzt werden.

3. Vorrichtung nach Anspruch 2, wobei jeder Stift (14) einzeln erhitzt wird.

4. Vorrichtung nach einem der Ansprüche 1 bis 3, wobei die Stifte (14) über den Großteil ihrer Länge zylindrisch ausgebildet sind und einen konischen Endteil aufweisen, der in einer Spitze (15) endet, die in den konischen Teil übergeht.

5. Vorrichtung nach einem der Ansprüche 1 bis 4, wobei bestimmte der Stifte (14) innerhalb der Anordnung miteinander zu einzelnen Schaltkreisen (24) zusammengeschlossen sind, wobei jeder Schaltkreis individuell gesteuert werden kann.

6. Vorrichtung nach einem der Ansprüche 1 bis 5, wobei die Temperatur der Stifte (14) bei Gebrauch zwischen 360 und 410°C gehalten wird.

7. Vorrichtung nach einem der Ansprüche 1 bis 6, die in einer Schneid- und Falzmaschine angeordnet ist.

8. Verfahren zum Perforieren einer Thermoplastplatte, umfassend das Bereitstellen einer Walze zum Stützen des Plattenmaterials und Mittel (16) zum Tragen einer Anordnung von erhitzten Stiften (14), Bringen der auf der Walze gehaltenen Anordnung in Kontakt mit dem Plattenmaterial, um dieses zu perforieren, und Bereitstellen einer Schicht von Material (18) zwischen dem Mittel zum Tragen der Anordnung von erhitzten Stiften und der Thermoplastplatte, um die Platte während der Perforation zu schützen, dadurch gekennzeichnet, daß die Stifte (14) in einem oder mehreren Materialstreifen (16) gehalten werden, daß die Schicht (18) aus einem Isoliermaterial besteht und daß die Stifte wenigstens auf das Doppelte der Schmelzpunkttemperatur des Thermoplastmaterials erhitzt werden, wodurch dessen Perforation bewirkt wird.

9. Verfahren nach Anspruch 8, wobei die Perforation gleichzeitig mit dem Schneiden und Falzen erfolgt.

10. Verfahren nach Anspruch 8, wobei die Perforation zur selben Zeit erfolgt, in der ein Abstreifer die Platte während den Perforierens abzieht.

## Revendications

1. Appareil pour perforer un matériau thermoplastique en feuille qui comprend une platine de support du matériau en feuille, des moyens (16) pour porter un arrangement de broches chauffées (14) de sorte que l'arrangement peut être amené en contact avec le matériau en feuille maintenu sur la platine afin de perforer ce dernier et une couche de matériau (18) disposés entre les moyens pour porter l'arrangement de broches chauffées et le matériau thermoplastique en feuille afin de protéger la feuille pendant la perforation, caractérisé en ce que les broches (14) sont maintenues en bande ou bandes de matériau (16), la couche (18) est en un matériau isolant, et en ce que les broches utilisées sont chauffées jusqu'à au moins deux fois le point de fusion du matériau thermoplastique.

2. Appareil selon la revendication 1 dans lequel les broches sont chauffées électriquement.

3. Appareil selon la revendication 2 dans lequel chaque broche (14) est chauffée individuellement.

4. Appareil selon l'une quelconque des revendications 1 à 3 dans lequel les broches (14) sont cylindriques sur toute leur longueur et présentent une partie extrême conique se terminant par une extrémité (15) qui fournit une introduction dans la partie conique.

5. Appareil selon l'une quelconque des revendications 1 à 4 dans lequel certaines des broches (14) de l'arrangement sont reliées entre elles dans des circuits individuels (24), chaque circuit étant capable d'être commandé individuellement.

6. Appareil selon l'une quelconque des revendications 1 à 5 dans lequel la température des broches (14) utilisées est maintenue entre 360 et 410°C.

7. Appareil selon l'une quelconque des revendications 1 à 6 disposé dans une machine à découper et à strier.

8. Procédé de perforation d'une feuille thermoplastique qui consiste à se munir d'une platine pour supporter le matériau en feuille et des moyens (16) pour porter un arrangement de broches chauffées (14), à amener l'arrangement en contact avec le matériau en feuille maintenu sur la platine afin de perforer cette dernière et à fournir une couche d'un matériau (18) entra les moyens pour porter l'arrangement de broches chauffées et le matériau thermoplastique en feuille afin de protéger la feuille au cours de la perforation, caractérisé en ce que les broches (14) sont maintenues en bande ou bandes de matériau (16), en ce que la couche (18) est en un matériau isolant, et en ce que les broches sont chauffées jusqu'à au moins deux fois le point de fusion du matériau thermoplastique afin de réaliser la perforation de ce dernier.

9. Procédé selon la revendication 8 dans lequel la perforation est effectuée simultanément avec du découpage et du striage.

10. Procédé selon la revendication 8 dans lequel la perforation est effectuée simultanément avec un dispositif de dénudage afin de dénuder la feuille tout en la perçant.
